# EUROPEAN PATENT SPECIFICATION

(11) **EP 1 535 884 B1**
(45) Date of publication and mention of the grant of the patent: **23.08.2006**
(21) Application number: 04016680.3
(22) Date of filing: 15.07.2004
(51) Int. Cl.: C03B 37/018

(54) **Method and apparatus for manufacturing optical fiber preform**
Verfahren und Vorrichtung zur Herstellung optischer Vorformen
Procédé et dispositif pour la fabrication de préformes pour des fibres optiques

(30) Priority: 27.11.2003 KR 2003085071
(43) Date of publication of application: 01.06.2005
(73) Proprietor: SAMSUNG ELECTRONICS CO., LTD., Suwon-city, Gyeonggi-do (KR)
(72) Inventor: Kim, Tae-Hyeong, Suwon-si Gyeonggi-do (KR); Kim, Hak-Seon, Suwon-si Gyeonggi-do (KR); Lee, Yeong-Seop, Suwon-si Gyeonggi-do (KR)
(74) Representative: Lang, Johannes

(56) References cited:
- EP-A- 1 300 371
- WO-A-89/02419
- US-A- 4 389 229
- US-A- 4 635 314

## Description

### BACKGROUND OF THE INVENTION

### 1. Field of the Invention

The present invention relates to a method and an apparatus for manufacturing an optical fiber preform. More particularly, the present invention relates to a method and an apparatus for manufacturing an optical fiber preform by a modified chemical vapor deposition process.

### 2. Description of the Related Art

In a conventional process for manufacturing an optical fiber, there are four basic steps: a preform manufacturing step, a drawing step, a sheath coating step, and a winding step. Particularly, the preform manufacturing step is for forming a basic preform in order to draw an optical fiber. The basic preform can be manufactured according to various methods including a vapor-phase deposition method, an outer chemical vapor-phase deposition method, a plasma chemical vapor deposition method, and a modified chemical vapor deposition method.

In particular, according to the modified chemical vapor deposition method, raw material gas and oxygen gas are injected into a hollow tube in order to form an optical fiber preform. In this state, the hollow tube containing the raw material gas and oxygen gas is heated, so that a thermal oxidation reaction is created in the hollow tube, thereby depositing a transparent glass layer on an inside wall of the hollow tube.

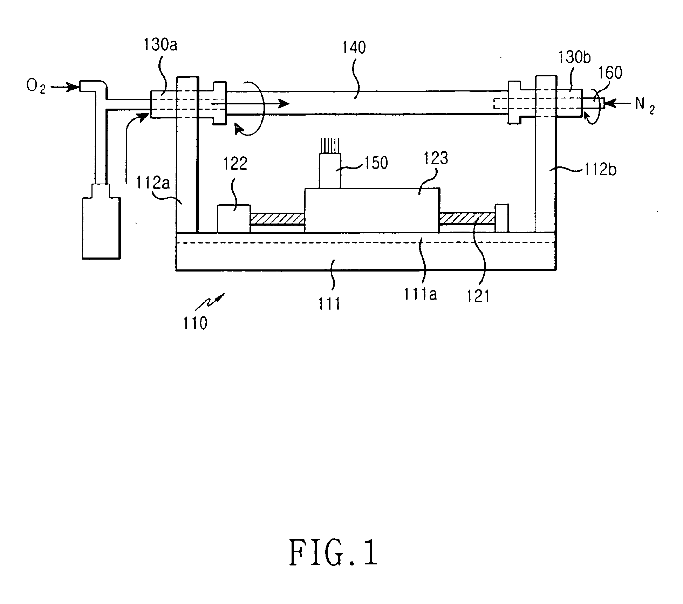

FIG. 1 is illustrates an apparatus for manufacturing an optical fiber preform through a modified chemical vapor deposition method. Referring to FIG. 1, a conventional apparatus for manufacturing the optical fiber preform includes a quartz reaction tube 140 that is rotated at a constant speed during a portion of the manufacturing process, and a pair of chucks 130a and 130b that rotatably support both ends of the quartz reaction tube 140. A table 110 permits support of the chucks 130a and 130b at respective sidewalls 112a and 112b, and a sliding member 123, which slidably moves in left and right directions along a base surface of the table 110. A burner 150 arranged on the sliding member heats an outer wall of the quartz reaction tube 140 while moving in left and right directions along a longitudinal axis of the quartz reaction tube 140. A feed screw 121 passes through the sliding member 123, and formed with the feed screw is a motor 122 that transfers driving force to the feed screw 121. A nitrogen tube 160 injects a nitride gas into the quartz reaction tube 140 in such a manner that raw material gas and soot smoothly flow in the quartz reaction tube 140.

The quartz reaction tube 140 is rotated by the chucks 130a and 130b as the raw material gas and oxygen gas, such as SiCl₄ and GeCl₄, are injected into the quartz reaction tube 140.

The burner 150 is moved in both left and right directions along the longitudinal axis of the quartz reaction tube 14 so as to heat an outer wall of the quartz reaction tube 140 during the time that raw material gas is also being injected into the quartz reaction tube 140.

As the inside of the quartz reaction tube 140 is maintained at a high temperature by the burner 150, the raw material gas and oxygen gas injected into the quartz reaction tube 140 are subject to an oxidization reaction due to an increase of an internal temperature of the quartz reaction tube 140. Accordingly, soot, such as SiCl₄ and GeCl₄, formed by the oxidization reaction may be deposited at an inside wall of the quartz reaction tube 140.

However, soot, which is a kind of oxide formed in the quartz reaction tube 140, is deposited at the inside wall of the quartz reaction tube 140 with a low depositing efficiency, so only about 40 to 50 percent of soot is deposited along the inside wall of the quartz reaction tube 140. The remaining soot stays in the apparatus during the manufacture of the optical fiber preform, thereby interrupting the optical fiber manufacturing process or causing defects in the optical fiber preform.
In order to discharge the soot that has not been deposited at the inside wall of the quartz reaction tube 140, a ventilating pipe is connected to one end of the quartz reaction tube and vents the soot to an exterior of the optical fiber perform.A nitride gas is injected into the quartz reaction tube so as to more easily discharge soot remaining in the quartz reaction tube through the ventilating pipe.

In other words, the nitrogen tube 160 injects nitride gas into the quartz reaction tube 140, so that a swirl flow is artificially formed in the inside of the quartz reaction tube 140. The swirl flow formed in the inside of the quartz reaction tube 140 exhausts excessive soot and the remaining raw material gas to the exterior of the quartz reaction tube 140.

However, the inventors of the present invention have discovered that one problem with the above conventional method for injecting nitride gas into the quartz reaction tube to reduce soot is that the nitride gas is injected into the quartz reaction tube in a reverse direction relative to an injection direction of the raw material gas. The reverse direction of the nitride gas causes problems because the swirl flow formed by the nitride gas flows in reverse direction to the injection direction of raw material gas, impeding a significant portion of the soot from being easily exhausted to the exterior.

### SUMMARY OF THE INVENTION

Accordingly, the present invention has been made in part to solve at least some of the above-mentioned problems. A first aspect of the present invention is to provide a method for manufacturing an optical fiber perform, said method being adapted for the easy exhaust of excess soot formed in the quartz reaction tube to an exterior of the quartz reaction tube.

In order to accomplish the above and other aspects of the present invention, there is provided a method for manufacturing an optical fiber preform by depositing soot created through a chemical reaction on an inside wall of a quartz reaction tube, the method comprising the steps of electrically charging created soot with a first predetermined charge, adhering the soot that is not deposited on the inside wall of the quartz tube to an electrified body charged with a second predetermined chargethat is opposite to the first predetermined charge, moving the electrified body having the soot adhered thereto to an exterior of the quartz reaction tube, and exhausting soot adhering to the electrified body by charging the electrified body with a charge identical to the first predetermined charge of soot to exhaust the soot to an exterior of the quartz reaction tube.

### BRIEF DESCRIPTION OF THE DRAWINGS

The above and other aspects, features and advantages of the present invention will be more apparent from the following detailed description taken in conjunction with the accompanying drawings, in which:
FIG. 1 is a view showing a conventional apparatus for manufacturing an optical fiber preform; and
FIG. 2 is a view showing an apparatus for manufacturing an optical fiber preform according to a first aspect of the present invention.

### DETAILED DESCRIPTION OF THE INVENTION

Hereinafter, preferred aspects of the present invention will be described with reference to the accompanying drawings. In the following description and drawings, the same reference numerals are used to designate the same or similar components, and so repetition of the description of the same or similar components will be omitted so as not to obscure the invention with unnecessary detail.

According to a method of manufacturing an optical fiber perform, a first portion of the soot formed through a chemical vapor deposition process is deposited to an inside wall of a quartz reaction tube. A second portion of the soot that comprises a remaining portionthat has not been deposited at the inside wall of the quartz reaction tube. The remaining portion of the soot is charged with a positive charge. Subsequent to the charging of the soot with the positive charge, some of the soot adheres to a metal rod having a negative pole. In another variation of the invention, all of the soot can be charged with a positive charge.

Once the metal rod has soot accumulated thereon, the rod is then moved to an exterior of the quartz reaction tube so as to allow the rod to be charged with a positive pole in order to cause the soot adhering to the rod to be discharged to the exterior.

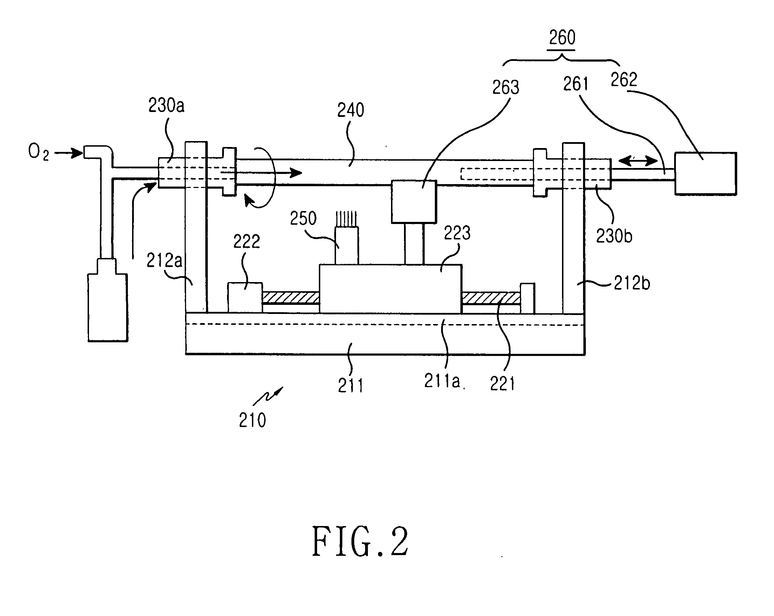

FIG. 2 is a view showing an apparatus for manufacturing an optical fiber preform according to an aspect of the present invention. Referring to FIG. 2, an apparatus for manufacturing the optical fiber preform according to the present invention may include a soot exhausting device 260 having an electrified body 263, a table 210 having a guiding groove which is formed at a bottom surface of the table 210, a burner 250, a sliding member 223, and a pair of chucks 230a and 230b.

Accordingly, the apparatus for manufacturing the optical fiber preform of the present invention can also includes a quartz reaction tube 240 in order to form optical fiber preform while the reaction tube is being heated, so that an inside of the quartz reaction tube 240 reaches a high temperature. In addition, raw material gas, (such as SiCl₄ and GeCl₄, and O₂), is injected into the quartz reaction tube 240 during the high state of temperature, so that soot is formed in the quartz reaction tube 240 through a chemical reaction. There is a portion of the soot that is deposited at an inside wall of the quartz reaction tube by a thermophoresis phenomenon, so as to form the optical fiber preform.

The chucks 230a and 230b passes through respective sidewalls 212a and 212b of the table 210 so as to rotatably fix the quartz reaction tube 240 to the table 210.
The table 210 supports the chucks 230a and 230b passing through the respective sidewalls 212a and 212b of the table 210, and a guiding groove 211a is formed at a bottom surface 211 of the table 210 so as to allow the sliding member 223 reciprocal movement in the left and right directions along a major axis of the quartz reaction tube 240.

The burner 250 is arranged on one side of the sliding member 223 in such a manner that the burner 250 can heat the outer surface of the quartz reaction tube while moving in left and right directions along the major axis of the quartz reaction tube 240.

The sliding member 223 is located on the guiding groove 211 a of the table 210, and a threaded feed screw 221 passes through a center portion of the sliding member 223. The sliding member 223 reciprocates in the left and right directions along the major axis of the quartz reaction tube 240 by rotation of the feed screw 221, the rotation being supplied by a motor 222.

The sliding member 223 is provided on an upper surface thereof with the burner 250 and the electrified body 263, so that the burner 250 and the electrified body 263 are reciprocal in left and right directions along the major axis of the quartz reaction tube 240.

The soot exhausting device 260 includes the electrified body 263 for charging excessive soot formed in the quartz reaction tube 240 with a positive charge, a second electrified body 261 inserted into or at least partially ejected from the inside of the quartz reaction tube 240, and a controller 262 for controlling a polarity and a position of the second electrified body 261.

According to the present invention, the excessive soot formed in the quartz reaction tube 240 is first charged with a positive charge by means of the first electrified body 263.

The second electrified body 261 repeatedly then moves with respect to the quartz reaction tube 240 under the control of the controller 262. In other words, the polarity of the second electrified body 261 is changed to a negative pole by the controller 262 when the second electrified body 261 is inserted into the quartz reaction tube 240, so that the second electrified body 261 absorbs soot charged with a positive charge. Also, the second electrified body 261 absorbing soot is moved to an exterior of the quartz reaction tube 240. At the same time, the polarity of the second electrified body 261 is changed to a positive pole, so that soot adhering to the second electrified body 261, which is also positively charged, is exhausted at the exterior of the quartz reaction tube 240. The second electrified body 261 includes a metallic rod.

The soot that has not been deposited at the inside wall of the quartz reaction tube 240 is therefore exhausted to the exterior of the quartz reaction tube 240 by the soot exhausting device 260.

The apparatus for manufacturing the optical fiber preform according to the present invention exhausts excessive soot formed in the quartz reaction tube by using the metal rod having a negative pole, after charging soot with a positive charge. Accordingly, excessive soot is easily exhausted, and a defect in manufacturing of the optical fiber preform caused by excessive soot can be reduced or almost eliminated.

Although preferred aspects of the present invention have been described for illustrative purposes, those skilled in the art will appreciate that various modifications, additions and substitutions are possible, the scope of the invention being defined by the accompanying claims.

For example, instead of removing soot from the electrified body by exposing same to a charge that matches the polarity of the soot to repel the soot from the body, it is also possible to use a cleaner body (not shown) having a predetermined charge (or being charged) that is equal in polarity to the second predetermined charge and greater in magnitude sufficient to attract the soot from the electrified body to the cleaner body, and wherein the electrified body is moved next to a cleaner body causing the soot to leave the electric body and attach to the cleaner body because of the greater magnitude of charge. It should also be understood while the aspects of the invention show a positively charged soot and a negatively charged electric body, it is well within the spirit of the invention and the scope of the appended claims that the polarities could be reversed, particularly if compounds are used to create the soot have a different magnetic attraction than those disclosed in the above examples. Also, although the term quartz tube is used, any tube that is able to withstand the heating process and can be used for a fiber optic perform can be used. Further, the electrified body may comprise electro magnets, solenoids, a charge corona, etc.

## Claims

1. A method for removing unused soot when manufacturing an optical fiber preform by soot deposition created through a chemical reaction on an inside wall of a reaction tube, the method comprising the steps of:
(a) charging unused soot that is not deposited on the inside wall of the tube with a first predetermined charge;
(b) adhering the unused soot to an electrified body charged with a second predetermined charge, in which said second predetermined charge is opposite in polarity to the first predetermined charge;
(c) moving the electrified body having soot adhered thereto to an exterior of the quartz reaction tube; and
(d) removing soot adhering to the electrified body that has been moved to an exterior of the reaction tube.

2. The method according to claim 1, wherein step (d) further includes:
(i) subsequently charging the electrified body with a charge identical to the first predetermined charge of soot to discharge the soot adhered to the electrified body.

3. The method according to claim 2, wherein:
the first predetermined charge in step (a) comprises a positive charge, and
the second predetermined charge in step (b) comprises a negative charge.

4. The method according to claim 1, wherein the electrified body in step (c) is moved next to a cleaner body having a predetermined charge that is equal in polarity and greater in magnitude to the second predetermined charge sufficient to attract the soot from the electrified body to the cleaner body.

5. The method according to claim 1, wherein the reaction tube is comprised of quartz.

6. The method according to claim 5, further comprising heating the quartz tube during at least a portion of formation of the fiber preform.

7. A method for removing unused soot when manufacturing an optical fiber preform by soot deposition created through a chemical reaction on an inside wall of a reaction tube, the method comprising the steps of:
(a) creating soot through a chemical reaction in a tube, wherein a first portion of the soot created is deposited on an inside wall of the reaction tube;
(b) charging the soot in the reaction tube with a first predetermined charge;
(c) removing a remaining portion of the soot by adhering the remaining portion to an electrified body that is adapted for movement inside and exterior to the reaction tube.

8. The method according to claim 7, wherein the removing in step (c) comprises
(i) first charging the electrified body with a second predetermined charge, in which said second predetermined charge is opposite in polarity to the first predetermined charge;
(ii) moving the electrified body to an area exterior to the reaction tube; and
(iii) subsequently charging the electrified body with a charge identical to the first predetermined charge of soot to discharge the soot adhered to the electrified body.

9. The method according to claim 7, wherein the reaction tube is comprised of quartz.

10. The method according to claim 7, wherein the soot is created in step (a) by chemical vapor deposition and deposited on the tube by thermophoresis, wherein a plurality of predetermined raw materials are inserted into the reaction tube and heated.

11. An apparatus for manufacturing an optical fiber preform by depositing soot created from raw material gas injected into a reaction tube through a chemical reaction, the apparatus comprising:
a soot exhausting device for removing excessive soot formed in the quartz reaction tube, the soot exhausting device including,
a first electrified body adapted for reciprocal movement in left and right directions along a major axis of the reaction tube so as to charge excessive soot formed in the reaction tube with a first predetermined charge;
a second electrified body absorbing soot by being charged with a second predetermined charge, which is opposite in polarity to the first predetermined charge, when the second electrified body inserted into the quartz reaction tube, and exhausting soot to an exterior of the quartz reaction tube by being charged with a charge identical to the first predetermined charge of soot after retreating to the exterior of the quartz reaction tube; and
a controller for controlling a movement and a conductive state of the second electrified body.

12. The apparatus as claimed in claim 11 further comprising:
a table rotatably supporting both side ends of the reaction tube at each side wall thereof, and having a guiding groove at a bottom surface thereof;
a burner heating an outer surface of the reaction tube;
a sliding member provided on an upper surface thereof with the burner and the first electrified body in such a manner that the burner and the first electrified body are spaced from each other, and adapted for a reciprocating movement in left and right directions along the guide groove in parallel to a major axis of the reaction tube; and
a pair of chucks passing each through a respective side wall of the table so as to rotatably fix the reaction tube to the table.

13. The apparatus as claimed in claim 11, wherein the reaction tube is comprised of quartz.

14. The apparatus as claimed in claim 12, wherein the sliding member having a threading in a center portion, and a feed screw adapted to engage with the threading in said sliding member, and a motor adapted for rotating the feed screw, so that said sliding member being adapted for movement in a longitudinal direction along the guiding groove.

15. The apparatus as claimed in claim 11, wherein the first electrified body and the second electrified body comprise electro-magnets.

16. The apparatus as claimed in claim 11, wherein the first electrified body comprises a charge corona.

17. The apparatus as claimed in claim 12, wherein a first chuck of said pair of chucks includes a passage for movement of raw material gas into the reaction tube.

18. The apparatus as claimed in claim 17, wherein a second chuck of said pair of chucks includes a passage for movement of the second electrified body therethrough.

## Patentansprüche

1. Verfahren zum Entfernen ungebrauchten Rußes beim Herstellen einer optischen Faser-Präform durch Rußablagerung erzeugt durch eine chemische Reaktion auf einer innenseitigen Wand einer Reaktionsröhre, wobei das Verfahren die Schritte umfasst:
(a) Aufladen von ungebrauchtem Ruß, der nicht auf der innenseitigen Wand der Röhre abgelagert ist, mit einer ersten vorherbestimmten Ladung;
(b) Anhaften des ungebrauchten Rußes an einen elektrifizierten Körper, der mit einer zweiten vorherbestimmten Ladung geladen ist, worin die zweite vorherbestimmte Ladung in Polarität umgekehrt zu der ersten vorherbestimmten Ladung ist;
(c) Bewegen des elektrifizierten Körpers, der daran Ruß angehaftet hat, zu einem Äußeren der Quarzreaktionsröhre; und
(d) Entfernen von Ruß, der dem elektrifizierten Körper anhaftet, welcher zu einem der Äußeren der Reaktionsröhre bewegt wurde.

2. Verfahren nach Anspruch 1, worin der Schritt (d) ferner umfasst:
(i) nachfolgend Aufladen des elektrifizierten Körpers mit einer Ladung, welche identisch zu der ersten vorherbestimmten Ladung des Rußes ist, um den dem elektrifizierten Körper anhaftenden Ruß zu entladen.

3. Verfahren nach Anspruch 2, worin:
die erste vorherbestimmte Ladung in Schritt (a) eine positive Ladung umfasst, und die zweite vorherbestimmte Ladung in Schritt (b) eine negative Ladung umfasst.

4. Verfahren nach Anspruch 1, worin der elektrifizierte Körper in Schritt (c) in die Nähe eines Reinigungskörpers bewegt wird, der eine vorherbestimmte Ladung hat, die gleich in Polarität und größer im Betrag als die zweite vorherbestimmte Ladung ist, ausreichend, um den Ruß von dem elektrifizierten Körper zu dem Reinigungskörper anzuziehen.

5. Verfahren nach Anspruch 1, worin die Reaktionsröhre Quarz beinhaltet.

6. Verfahren nach Anspruch 5, ferner umfassend Heizen der Quarzröhre während wenigstens einem Abschnitt des Formens der Faser-Präform.

7. Verfahren zum Entfernen ungebrauchten Rußes beim Herstellen einer optischen Faser-Präform durch Rußablagerung erzeugt durch eine chemische Reaktion auf einer innenseitigen Wand einer Reaktionsröhre, wobei das Verfahren die Schritte umfasst:
(a) Erzeugen von Ruß durch eine chemische Reaktion in einer Röhre, worin ein erster Anteil des erzeugten Rußes auf einer innenseitigen Wand der Reaktionsröhre abgelagert wird;
(b) Laden des Rußes in der Reaktionsröhre mit einer ersten vorherbestimmten Ladung;
(c) Entfernen eines verbleibenden Anteils des Rußes durch Anhaften des verbleibenden Anteils an einen elektrifizierten Körper, der zur Bewegung innerhalb und außerhalb der Reaktionsröhre eingerichtet ist.

8. Verfahren nach Anspruch 7, worin das Entfernen in Schritt (c) umfasst:
(i) zuerst Laden des elektrifizierten Körpers mit einer zweiten vorherbestimmten Ladung, worin die zweite vorherbestimmte Ladung in Polarität entgegengesetzt zu der ersten vorherbestimmten Ladung ist;
(ii) Bewegen des elektrifizierten Körpers zu einem Bereich, der außerhalb der Reaktionsröhre liegt; und
(iii) nachfolgend Laden des elektrifizierten Körpers mit einer Ladung, die identisch zu der ersten vorherbestimmten Ladung von Ruß ist, um den an den elektrifizierten Körper anhaftenden Ruß zu entladen.

9. Verfahren nach Anspruch 7, worin die Reaktionsröhre Quarz beinhaltet.

10. Verfahren nach Anspruch 7, worin der Ruß in Schritt (a) erzeugt wird durch chemische Aufdampfung bzw. Gasphasenabscheidung und auf der Röhre durch Thermophorese abgelagert wird, worin eine Vielzahl von vorherbestimmten Rohmaterialien in die Reaktionsröhre eingeführt und erhitzt werden.

11. Vorrichtung zur Herstellung einer optischen Faser-Präform durch Ablagern von Ruß, erzeugt aus Rohmaterialgas, das in eine Reaktionsröhre eingespeist wird, durch eine chemische Reaktion, wobei die Vorrichtung umfasst:
eine Rußausbringungsvorrichtung zum Entfernen überschüssigen Rußes, der in der Quarzreaktionsröhre gebildet ist, wobei die Rußausbringungsvorrichtung aufweist
einen ersten elektrifizierten Körper, der eingerichtet ist zur wechselseitigen Bewegung in linke und rechte Richtungen entlang einer Hauptsachse der Reaktionsröhre, um in der Reaktionsröhre gebildeten überschüssigen Ruß mit einer ersten vorherbestimmten Ladung zu laden;
einen zweiten elektrifizierten Körper, welcher Ruß absorbiert durch Auf geladenwerden mit einer zweiten vorherbestimmten Ladung, welche in Polarität entgegengesetzt zu der ersten vorherbestimmten Ladung ist, wenn der zweite elektrifizierte Körper in die Quarzreaktionsröhre eingeführt ist, und Ruß zu einem Äußeren der Quarzreaktionsröhre ausbringt, indem er mit einer Ladung geladen wird, die identisch zur ersten vorherbestimmten Ladung von Ruß ist, nach Zurückkehren zu dem Äußeren der Quarzreaktionsröhre; und
einen Controller zum Kontrollieren einer Bewegung und eines Leitungszustandes des zweiten elektrifizierten Körpers.

12. Vorrichtung nach Anspruch 11, ferner umfassend:
einen Tisch, welcher rotierbar beide Seitenenden der Reaktionsröhre an jede Seitenwand davon trägt, und eine Führungsnut auf einer unteren Oberfläche davon hat;
einen Brenner, welcher eine äußere Oberfläche der Reaktionsröhre heizt;
ein Gleitteil, welches auf einer oberen Fläche mit dem Brenner und dem ersten elektrifizierten Körper in solch einer Weise versehen ist, dass der Brenner und der erste elektrifizierte Körper voneinander beabstandet sind, und eingerichtet zu einer wechselseitigen Bewegung in linke und rechte Richtungen entlang der Führungsnut parallel zu einer Hauptachse der Reaktionsröhre; und
ein Paar von Spannvorrichtungen, welche jede durch eine jeweilige Seitenwand des Tisches hindurchgehen, um die Reaktionsröhre rotierbar auf dem Tisch zu befestigen.

13. Vorrichtung nach Anspruch 11, worin die Reaktionsröhre Quarz beinhaltet.

14. Vorrichtung nach Anspruch 12, worin das Gleitteil ein Gewinde in einem Mittelabschnitt hat, und eine Zustellschraube, die eingerichtet ist, in das Gewinde in dem Gleitteil einzugreifen, und einen Motor, der eingerichtet ist, die Zustellschraube zu drehen, so dass das Gleitteil eingerichtet zur Bewegung in einer longitudinalen Richtung entlang der Führungsnut ist.

15. Vorrichtung nach Anspruch 11, worin der erste elektrifizierte Körper und der zweite elektrifizierte Körper Elektromagneten umfassen.

16. Vorrichtung nach Anspruch 11, worin der erste elektrifizierte Körper eine Ladungskorona umfasst.

17. Vorrichtung nach Anspruch 12, worin eine erste Spannvorrichtung des Paares von Spannvorrichtungen einen Durchlass zum Bewegen von Rohmaterialgas in die Reaktionsröhre umfasst.

18. Vorrichtung nach Anspruch 17, worin eine zweite Spannvorrichtung des Paares von Spannvorrichtungen einen Durchlass zum Bewegen des zweiten elektrifizierten Körpers dadurch umfasst.

## Revendications

1. Procédé d'élimination de la suie inutilisée lors de la fabrication d'une préforme de fibre optique par dépôt de suie produite par réaction chimique sur une paroi intérieure d'un tube de réaction, le procédé comprenant les étapes consistant à :
(a) charger la suie inutilisée qui n'est pas déposée sur la paroi intérieure du tube avec une première charge prédéterminée ;
(b) faire adhérer la suie inutilisée à un corps électrifié chargé avec une seconde charge prédéterminée, ladite seconde charge prédéterminée étant de polarité opposée à celle de la première charge prédéterminée ;
(c) déplacer le corps électrifié sur lequel adhère la suie vers un extérieur du tube de réaction en quartz ; et
(d) éliminer la suie adhérant au corps électrifié qui a été déplacé vers un extérieur du tube de réaction.

2. Procédé selon la revendication 1, dans lequel l'étape (d) comprend en outre l'étape consistant à :
(i) charger ensuite le corps électrifié avec une charge identique à la première charge prédéterminée de suie pour retirer la suie adhérant au corps électrifié.

3. Procédé selon la revendication 2, dans lequel :
la première charge prédéterminée de l'étape (a) comprend une charge positive, et la seconde charge prédéterminée de l'étape (b) comprend une charge négative.

4. Procédé selon la revendication 1, dans lequel le corps électrifié de l'étape (c) est déplacé près d'un corps nettoyeur ayant une charge prédéterminée qui est de même polarité et d'importance supérieure à la seconde charge prédéterminée et suffisante pour que la suie provenant du corps électrifié soit attirée sur le corps nettoyeur.

5. Procédé selon la revendication 1, dans lequel le tube de réaction se compose de quartz.

6. Procédé selon la revendication 5, comprenant en outre le chauffage du tube en quartz durant au moins une partie de la formation de la préforme de fibre.

7. Procédé d'élimination de la suie inutilisée lors de la fabrication d'une préforme de fibre optique par dépôt de suie produite par réaction chimique sur une paroi intérieure d'un tube de réaction, le procédé comprenant les étapes consistant à :
(a) produire de la suie par réaction chimique dans un tube, une première partie de la suie produite étant déposée sur une paroi intérieure du tube de réaction ;
(b) charger la suie dans le tube de réaction avec une première charge prédéterminée ;
(c) éliminer la partie restante de la suie en faisant adhérer la partie restante à un corps électrifié qui est adapté pour se déplacer à l'intérieur et à l'extérieur du tube de réaction.

8. Procédé selon la revendication 7, dans lequel l'élimination de l'étape (c) comprend les étapes consistant à :
(i) tout d'abord, charger le corps électrifié avec une seconde charge prédéterminée, ladite seconde charge prédéterminée étant de polarité opposée à celle de la première charge prédéterminée ;
(ii) déplacer le corps électrifié vers une zone extérieure au tube de réaction ; et
(iii) charger ensuite le corps électrifié avec une charge identique à la première charge prédéterminée de suie pour retirer la suie adhérant au corps électrifié.

9. Procédé selon la revendication 7, dans lequel le tube de réaction se compose de quartz.

10. Procédé selon la revendication 7, dans lequel la suie est produite dans l'étape (a) par dépôt chimique en phase vapeur et est déposée sur le tube par thermophorèse, une pluralité de matières premières prédéterminées étant introduites dans le tube de réaction et chauffées.

11. Appareil de fabrication d'une préforme de fibre optique par dépôt de suie produite à partir de matières premières gazeuses injectées dans un tube de réaction par réaction chimique, l'appareil comprenant :
un dispositif d'évacuation de suie permettant d'éliminer l'excès de suie formé dans le tube de réaction en quartz, le dispositif d'évacuation de suie comprenant :
un premier corps électrifié adapté pour un déplacement en va-et-vient vers la gauche et vers la droite sur un axe majeur du tube de réaction de manière à charger l'excès de suie formé dans le tube de réaction avec une première charge prédéterminée ;
un second corps électrifié qui absorbe la suie en étant chargé avec une seconde charge prédéterminée qui est de polarité opposée à celle de la première charge prédéterminée lorsque le second corps électrifié est introduit dans le tube de réaction en quartz, et qui évacue la suie vers un extérieur du tube de réaction en quartz en étant chargé avec une charge identique à la première charge prédéterminée de suie après retrait vers l'extérieur du tube de réaction en quartz ; et
un régulateur permettant de réguler un mouvement et un état de conduction du second corps électrifié.

12. Appareil selon la revendication 11, comprenant en outre :
une table supportant de manière rotative les deux extrémités latérales du tube de réaction au niveau de chaque paroi latérale de celle-ci et ayant une rainure de guidage au niveau d'une surface de fond de celle-ci ;
un brûleur chauffant une surface extérieure du tube de réaction ;
un élément coulissant doté, sur une surface supérieure de celui-ci, du brûleur et du premier corps électrifié de telle manière que le brûleur et le premier corps électrifié sont espacés l'un de l'autre, et adapté pour un déplacement en va-et-vient vers la gauche et vers la droite le long de la rainure de guidage en parallèle à un axe majeur du tube de réaction ; et
deux dispositifs de serrage traversant chacun une paroi latérale respective de la table de manière à permettre la fixation rotative du tube de réaction à la table.

13. Appareil selon la revendication 11, dans lequel le tube de réaction se compose de quartz.

14. Appareil selon la revendication 12, dans lequel l'élément coulissant a un filetage dans une partie centrale et une vis d'alimentation adaptée pour collaborer avec le filetage dudit élément coulissant, et un moteur adapté pour faire tourner la vis d'alimentation, de telle manière que ledit élément coulissant est adapté pour un déplacement dans une direction longitudinale le long de la rainure de guidage.

15. Appareil selon la revendication 11, dans lequel le premier corps électrifié et le second corps électrifié comprennent des électro-aimants.

16. Appareil selon la revendication 11, dans lequel le premier corps électrifié comprend comporte une charge corona.

17. Appareil selon la revendication 12, dans lequel un premier dispositif de serrage parmi lesdits deux dispositifs de serrage comporte un passage permettant le déplacement de matières premières gazeuses dans le tube de réaction.

18. Appareil selon la revendication 17, dans lequel un second dispositif de serrage parmi lesdits deux dispositifs de serrage comporte un passage permettant le déplacement du second corps électrifié à travers celui-ci.
